Europäisches Patentamt

European Patent Office

Office européen des brevets

(11) Publication number: **0 115 190**

**B1**

# (12) EUROPEAN PATENT SPECIFICATION

(45) Date of publication of patent specification: 30.09.87

(51) Int. Cl.⁴: **C 08 F 8/44**

(21) Application number: 83307918.9

(22) Date of filing: 22.12.83

(54) **Ionomers having improved low temperature properties.**

(30) Priority: 28.12.82 US 453951
21.03.83 US 477512

(43) Date of publication of application:
08.08.84 Bulletin 84/32

(45) Publication of the grant of the patent:
30.09.87 Bulletin 87/40

(84) Designated Contracting States:
BE CH DE FR GB IT LI LU NL SE

(56) References cited:
DE-A-2 341 462
GB-A-1 125 549
US-A-3 264 272

(73) Proprietor: E.I. DU PONT DE NEMOURS AND COMPANY
1007 Market Street,
Wilmington Delaware 19898 (US)

(72) Inventor: Statz, Robert Joseph
115 Beverly Drive
Kennett Square Pennsylvania 19348 (US)

(74) Representative: Jones, Alan John et al
CARPMAELS & RANSFORD 43 Bloomsbury Square
London, WC1A 2RA (GB)

The file contains technical information submitted after the application was filed and not included in this specification

Courier Press, Leamington Spa, England.

# 0 115 190

**Description**

Background of the invention
Field of the invention

This invention relates to ionomers and more particularly it relates to ionomers having a low level of chain branching.

Description of the prior art

Copolymers of ethylene and acrylic or methacrylic acids partially neutralized with metal ions such as sodium or zinc ions (ethylene ionomers) are well-known and are tough molding resins with a combination of good tensile properties and excellent abrasion resistance. Their deficiency is that at low temperatures they become excessively stiff (rigid).

U.S. Patent 3,264,272 discloses ethylene/methacrylic acid/acrylic ester copolymers and ionomers produced from these materials. Polymerization at high pressures of 5.07 to 304 MPa (50 to 3000 atmospheres) and elevated temperatures of 150 to 300°C in the presence of a free-radical polymerization initiator is disclosed.

German OLS 2341462 discloses ethylene/acrylate/acid copolymers and ionomers and reactor temperatures of from 150—300°C. It does not disclose any relationship between reactor temperatures and physical properties at low temperatures. The polymer obtained is disclosed to have improved oxygen permeability. The examples are run at polymerization temperatures of 215°C and as such would not have good low temperature properties.

Summary of the invention

According to the present invention there is provided an ionic copolymer of ethylene, unsaturated carboxylic acid and at least one softening comonomer that is characterized by being copolymerizable with ethylene and forming a homopolymer that has a glass transition temperature of 37°C or below said ionic copolymer having improved low temperature properties, wherein the unsaturated carboxylic acid is selected from the group consisting of acrylic acid, methacrylic acid, maleic acid, fumaric acid, itaconic acid, and half esters of maleic, fumaric and itaconic acids, said copolymer containing from about 10 to about 87% by weight of ethylene, from about 3 to about 30% by weight of unsaturated acid and from about 10 to about 60% by weight of said softening comonomer, said copolymer having from about 3 to about 90% of the carboxylic acid groups ionized by neutralization with metal ion selected from groups Ia, Ib, IIa, IIb, IIIa, IVa, VIb and VIII of the Periodic Table of Elements, said copolymer being characterized by a low level of chain branching of up to about 2.8 chain branches/1000 backbone methylene units.

Further according to the present invention there is provided an improved process of preparing ionic copolymers having improved low temperature properties, said process being selected from the group consisting of direct copolymerization and graft copolymerization wherein

(A) said direct copolymerization comprises polymerizing ethylene, unsaturated carboxylic acid and at least one comonomer in the presence of free radical polymerization initiator at elevated temperatures followed by neutralization of the carboxylic acid groups of the resultant direct copolymer with metal ions, and

(B) said graft copolymerization comprises polymerizing ethylene and at least one comonomer in the presence of free radical polymerization initiator at elevated temperatures and grafting unsaturated carboxylic acid or anhydride onto the ethylene/comonomer polymer backbone followed by neutralization of the carboxylic acid groups of the resultant graft copolymer with metal ions, the improvement comprising selecting said comonomer from the group consisting of softening comonomers that are characterized by being copolymerizable with ethylene and forming a homopolymer that has a glass transition temperature of −37°C or below, and selecting the unsaturated acid from the group consisting of acrylic acid, methacrylic acid, maleic acid, fumaric acid, itaconic acid and half esters of maleic, fumaric and itaconic acid, said copolymer containing from about 10 to about 87% by weight of ethylene, from about 3 to about 30% by weight of unsaturated acid, and from about 10 to about 60% by weight of softening comonomer, the polymerization temperature being from about 100 to about 200°C, from about 3 to about 90% of the carboxylic acid groups of the copolymer being neutralized with metal ions selected from groups Ia, Ib, IIa, IIb, IIIa, IVa, VIb and VIII of the Periodic Table.

Detailed description of the invention

Surprisingly it was found that certain ionomers derived from ethylene, a softening comonomer and methacrylic acid had improved low temperature properties. These polymers produced at low reactor temperatures, having reduced levels of chain branching, and containing the proper softening comonomer gave ionomers which do not get as stiff at low temperatures and had greatly improved flex crack resistance (Ross Flex) when compared to ionomers produced at high reactor temperatures containing softening comonomers which do not give low glass transition homopolymers.

Accordingly, they are useful as injection-molded items such as ski boots and ice skate shells, and as coatings for fabrics. Additionally, since the ionomers of this invention have superior low temperature properties and lower hardness compared to commercially available ionomers, they could perform as a

2

replacement for balata (balata is trans-1,4-polyisoprene) in golf ball covers. Accordingly, golf balls comprising a core and a cover, wherein the cover comprises the ionic copolymer of the present invention would have similar click and feel as a golf ball made with balata cover. The ionomers of the present invention, can also be used as modifiers for other thermoplastics where they function very efficiently as tougheners.

The polymer of the present invention should be a copolymer of ethylene, unsaturated carboxylic acid and at least one softening comonomer that is copolymerizable with ethylene and gives a homopolymer having low glass transition temperature, said copolymer being partially neutralized with a metal ion.

The unsaturated acid can be selected from the group consisting of acrylic acid, methacrylic acid, maleic acid, fumaric acid and itaconic acid, and the half esters of maleic, fumaric and itaconic acid. The preferred acids are methacrylic acid and acrylic acid.

The softening comonomer can be an alkylester of acrylic acid especially an alkyl acrylate selected from the group consisting of n-propyl-, n-butyl-, n-octyl-, 2-ethylhexyl-, and 2-methoxyethyl-acrylates. The preferred alkyl acrylates are n-butyl-, 2-ethylhexyl-, and 2-methoxyethyl-acrylates, preferably in an amount of from about 15 to about 25% by weight of the copolymer.

The softening comonomer can also be an alkyl vinyl ether, especially one selected from the group consisting of n-butyl-, n-hexyl-, 2-ethylhexyl-, and 2-methoxyethyl-vinyl ether. The preferred alkyl vinyl ethers are n-butyl vinyl ether and n-hexyl vinyl ether, preferably in an amount of from about 10 to about 30% by weight of the copolymer.

Other softening comonomers that are characterized by being copolymerizable with ethylene and forming low glass transition temperature homopolymers are also suitable in the present invention either in place of or in addition to the softening comonomers mentioned above. They can be selected from "The Glass Transition Temperature of Polymers" section of the *Polymer Handbook, Second Edition* J. Brandrup & E. H. Immergut, etc., J. Wiley and Sons, New York, 1975, as those comonomers whose homopolymers have glass transition temperatures of $-37°C$ and below. Accordingly, such softening comonomers can be e.g., acrylates, and vinyl ethers other than the ones specifically mentioned above, vinyl esters, and vinyl siloxanes.

The copolymer contains from about 10 to about 87% by weight of ethylene, from about 3 to about 30% by weight of unsaturated carboxylic acid, and from about 10 to about 60% by weight of softening comonomer. Preferably the copolymer contains from about 60 to about 75% by weight of ethylene, from about 5 to about 15% by weight of unsaturated carboxylic acid and from about 10 to about 30% by weight of softening comonomer.

The copolymer of the present invention has from about 3 to about 90% of the carboxylic acid groups ionized by neutralization with metal ions selected from groups Ia, Ib, IIa, IIb, IIIa, IVa, VIb and VIII of the Periodic Table of the Elements, such as sodium, potassium, zinc, calcium, magnesium, lithium, aluminum, nickel, and chromium. Preferably the copolymer has from about 35 to about 75% of the carboxylic acid groups ionized by neutralization with metal ions selected from the group consisting of sodium, potassium, zinc, calcium and magnesium.

The ionic copolymers of the present invention can be prepared by direct or graft copolymerization. The direct copolymerization process comprises polymerizing ethylene, unsaturated carboxylic acid and softening comonomer in the presence of free radical polymerization initiator at elevated temperatures of from about 100 to about 200°C, preferably from about 140 to about 160°C or from about 130 to about 145°C at high pressures, e.g., at least about 140 mPa (20,000 psi) preferably from about 140 mPa (20,000 psi) to about 350 mPa (50,000 psi) followed by neutralization of the carboxylic acid groups of the resultant direct copolymer with metal ions. A suitable polymerization process is discussed in detail in U.S. 3,264,272 (except for the unexpected advantages obtained by employing the lowest possible reactor temperatures).

The graft copolymerization process can be carried out by polymerizing ethylene and softening comonomer in the presence of free radical polymerization initiator at elevated temperatures of from about 100 to about 200°C, preferably from about 140 to about 160°C and from about 130 to about 145°C, at high pressures e.g., at least about 140 mPa (20,000 psi), preferably from about 140 mPa (20,000 psi) to about 350 mPa (50,000 psi), and grafting unsaturated carboxylic acid or anhydride onto the ethylene/softening comonomer polymer backbone followed by neutralization of the carboxylic acid groups of the resultant graft copolymer with metal ions.

The ionomers of the present invention can be blended with other materials such as nylon, polypropylene, propylene-ethylene copolymers, linear polyethylene, and ethylene/unsaturated carboxylic acid copolymers. These blends will generally find use as toughened thermoplastics.

The ionomers of the present invention containing the monomers specified above and obtained at the low reaction temperatures specified above are characterized by a lower level of chain branching, i.e., up to about 2.8 chain branches/1000 backbone methylene units as determined by C-13 NMR.

The following examples serve to illustrate the present invention. All parts, percentages and proportions are by weight unless otherwise indicated.

Comparative Example 1 and Example 1

The polymer of Comparative Example 1, containing normal butyl acrylate, ethylene and methacrylic acid, was produced by a free radical polymerization carried out at a reactor tempeature of 220°C and 190 mPa (27,000 psi). Monomer addition was adjusted to give a polymer containing 10.1% of methacrylic acid (MAA), 17% of n-butyl acrylate (nBA) and 72.9% of ethylene.

The polymer (base resin) was converted to sodium ionomer by reacting it with a concentrate containing sodium carbonate. Hence 1000 g of the copolymer was reacted with 72 g of a concentrate (containing 50% $Na_2CO_3 \cdot H_2O$ in an ethylene/methacrylic acid copolymer containing 11% MAA and having a melt flow of 100 g/10 min). The reaction was carried out in a twin screw extruder using the following conditions.

| | Extrusion conditions | | | | | | | |
| | Temperatures, °C, zones | | | | | Rate | Vacuum | |
| Screw speed RPM | 1 | 2 | 3 | 4 | 5 | Kg/h lbs/h. | kPa (in. Hg) | $H_2O$ feed cc/h. |
|---|---|---|---|---|---|---|---|---|
| 50 | 135 | 236 | 247 | 262 | 280 | 2.27 (5) | 101.6 (30) | 20 |

The polymer of Example 1 was synthesized at 140°C and 190 mPa (27,000 psi). Comonomer addition was adjusted to give a composition similar to the composition of the polymer of Comparative Example 1.

The polymer was converted to ionomer using an extrusion procedure similar to the one used in Comparative Example 1. However in this case 2.27 Kg of polymer was mixed with 147 g of zinc oxide concentrate (30% ZnO, 1.5% zinc acetate in E/10 MAA copolymer). Comparison of the results for the polymers of Comparative Example 1 and Example 1 indicate that the polymer made at 220°C had a higher increase in flexural modulus at lower temperatures and much poorer flex crack resistance (Ross Flex) at −20°C. Compositions and properties are summarized in Table 1.

C-13 NMR analysis was also carried out on the ethylene/n-butyl acrylate/methacrylic acid copolymers of Comparative Example 1 and Example 1 before their conversion to ionomers. The data obtained demonstrated that the use of low reactor temperatures (140°C) have reduced by almost half the amount of alkyl branches per 1000 backbone methylene units in the copolymer as compared to a copolymer produced at a high reactor temperature of 220°C (cf. chain branching Table below).

Chain branching table

| Example | MAA % | nBA % | Reactor temp. °C | No. of butyl or larger alkyl branches per 1000 backbone methylene units |
|---|---|---|---|---|
| C-1 | 10.1 | 17.0 | 220 | 4.6 |
| 1 | 8.5 | 17.0 | 140 | 2.5 |

TABLE I

| Ex. | MAA % | Composition nBA % | iBA % | MI[1] base resin | MI[1] ionomer | Ion type | Ross Flex[2] at −20°C cycles to fail | 23°C | Flexural modulus[3] Kpa 0°C | (Kpsi) −20°C | −30°C | Reactor temp. °C | MP/FP[4] |
|---|---|---|---|---|---|---|---|---|---|---|---|---|---|
| C-1 | 10.1 | 17.0 | — | 45 | 2.3 | Na | <50 | 48.3 (7.0) | 85.5 (12.4) | 252 (36.6) | 344 (49.9) | 220 | 75/44 |
| 1 | 8.5 | 17.0 | — | 19 | 2.9 | Zn | 800 | 54.12 (7.85) | 92.8 (13.46) | 159 (23.0) | 268 (38.8) | 140 | 81/56 |
| 2 | 8.6 | 24.0 | — | 19 | 2.8 | Zn | 325 | 24.8 (3.6) | 35.4 (5.14) | 78.6 (11.4) | 132 (19.2) | 195 | 70/41 |
| 3 | 9.4 | 22.4 | — | 18 | 1.1 | Zn | 1700 | 21.8 (3.16) | 31.6 (4.58) | 80.7 (11.7) | 94.5 (13.7) | 140 | 68/40 |
| C-2 | 9.9 | — | 19.8 | 25 | 1.4 | Na | <50 | 47.6 (6.90) | 134.6 (19.5) | 340 (49.3) | | 140 | 72/37 |
| C-3 | 9.9 | — | 19.8 | 25 | 5.0 | Zn | <50 | 28.3 (4.10) | 133 (19.3) | 277 (40.3) | | 140 | 73/47 |

Footnotes
[1] MI, melt index was determined by ASTM D-1238, Condition E.
[2] Ross Flex was determined by ASTM D-1052.
[3] Flexural Modulus was determined by ASTM D-790.
[4] MP/FP represents melting and freezing point as determined by Differential Scanning Calorimeter (DSC) using a Du Pont 990 Thermal Analyzer.

Examples 2 and 3

The polymer of Example 2 was produced at 190 mPa (27,000 psi) and 195°C with a composition containing 8.6% of MAA, 24% of nBA, and 67.4% of ethylene. This polymer was subsequently converted to zinc ionomer by reacting it with zinc acetate on a two roll mill. Hence 100 g of polymer was reacted with 6.6 g of $Zn(OAc)_2 \cdot 2H_2O$ in 25 cc of $H_2O$ at 200°C. The final ionomer had a MI of 2.8.

The polymer of Example 3 was produced in a manner similar to those of Comparative Example 1 and Examples 1 and 2. However, the reaction was run at 140°C and an attempt was made to match the composition of Example 2. Hence, a polymer containing 9.4% of MAA, 22.4% of nBA and 68.2% of ethylene was produced and converted to ionomer.

Conversion to ionomer was achieved by reacting 1 Kg of polymer with 60 g of $Zn(OAc)_2 \cdot 2H_2O$ dissolved in 150 cc of $H_2O$ on a 15.24 cm (6 inch) 2 roll mill at 190—200°C. The resulting ionomer was molded and evaluated for physical properties.

The results of the evaluation on the ionomer of Example 3 indicated that it had a lower flexural modulus than that of Example 2 and had significantly improved Ross flex durability at −20°C. Compositions and properties are summarized in Table I.

Comparative Examples 2 and 3

These polymers were produced at 140°C and 190 mPa (27,000 psi) and contained 70.3% of ethylene, 19.8% of isobutyl acrylate (iBA), and 9.9% of methacrylic acid and were converted to ionomers. The flexural modulus and Ross flex of these ionomers demonstrate that n-butyl acrylate polymers are superior to isobutyl acrylate polymers. Homopolymers of iBA have a relatively high glass transition temperature (−24°C). Compositions and properties are summarized in Table I.

Comparative Examples 2—3 also demonstrate that there is little or no difference between sodium and zinc ionomers. Hence, the improved flex crack resistance and the reduced low temperature stiffness are attributable not to the ion type but to the softening comonomer and the degree of chain branching.

Example 4

A blend of 66-Nylon (Zytel® 101, E. I. du Pont de Nemours and Company) was produced containing 30% of a zinc ionomer made by neutralizing a copolymer of the following composition: E/28.0 nBA/10.1 MAA. The melt blend was produced on a twin screw extruder using a high shear screw design and a melt temperature of 270°C. The resulting polymer blend was injection molded into tensile and flexural modulus bars using standard nylon molding conditions. Results of physical tests on these molded samples are summarized in the Table below:

| Tensile strength[1] at break | |
|---|---|
| MPa | 47 |
| (psi) | 6800 |
| | |
| Elongation[1], % | 110 |
| | |
| Flex modulus dry as molded | |
| MPa | 1500 |
| (psi) | 222,000 |
| | |
| Notched izod impact[2] | |
| at 23°C J/m | 1400 |
| (ft-lb/in) | 27 |
| | |
| at −20°C J/m | 460 |
| (ft-lb/in) | 8.6 |

Footnotes

[1]Tensile strength and % elongation was determined by ASTM-638.
[2]Notched Izod Impact was determined by ASTM-256.

Compared to unmodified 66-Nylon (Zytel® 101) the data indicate the ability of these ionomers to significantly toughen nylon and to give improved toughness at low temperatures.

**Claims**

1. Ionic copolymer of ethylene, unsaturated carboxylic acid and at least one softening comonomer that is characterized by being copolymerizable with ethylene and forming a homopolymer that has a glass transition temperature of −37°C or below, said ionic copolymer having improved low temperature properties, wherein the unsaturated carboxylic acid is selected from the group consisting of acrylic acid, methacrylic acid, maleic acid, fumaric acid, itaconic acid, and half esters of maleic, fumaric and itaconic acids, said copolymer containing from about 10 to about 87% by weight of ethylene, from about 3 to about 30% by weight of unsaturated acid and from about 10 to about 60% by weight of said softening comonomer, said copolymer having from about 3 to about 90% of the carboxylic acid groups ionized by neutralization with metal ion selected from groups Ia, Ib, IIa, IIb, IIIa, IVa, VIb and VIII of the Periodic Table of Elements, said copolymer being characterized by a low level of chain branching of up to about 2.8 chain branches/1000 backbone methylene units.

2. The ionic copolymer of Claim 1 wherein said softening comonomer is selected from the group consisting of alkyl esters of acrylic acid, alkyl vinyl ethers, vinyl esters and vinyl siloxanes.

3. The ionomer of Claim 1 or 2 wherein said metal ion is selected from the group consisting of sodium, potassium, zinc, calcium, magnesium, lithium, aluminum, nickel, and chromium.

4. The ionomer of Claim 1, 2, or 3 wherein said softening comonomer is selected from the group consisting of alkyl esters of acrylic acid and alkyl vinyl ethers wherein the alkyl group of said acrylic acid ester is selected from the group consisting of n-propyl, n-butyl, n-octyl, 2-ethylhexyl and 2-methoxyethyl and the alkyl group of said ether is selected from the group consisting of n-butyl, n-hexyl, 2-ethylhexyl and 2-methoxyethyl.

5. The ionomer of any one of Claims 1 to 4 wherein the ionomer is direct copolymer, said unsaturated acid is selected from the group consisting of acrylic acid and methacrylic acid, said softening comonomer is selected from the group consisting of alkyl esters of acrylic acid and alkyl vinyl ethers and said alkyl ester is selected from the group consisting of n-butyl acrylate, 2-ethylhexyl acrylate and 2-methoxyethyl acrylate, and said alkyl vinyl ether is selected from the group consisting of n-butyl vinyl ether and n-hexyl vinyl ether.

6. The ionomer of Claim 5 wherein said ethylene is present in an amount of from about 60 to about 75% by weight, said unsaturated acid is present in an amount of from about 5 to about 15% by weight, said alkyl ester is present in an amount of from about 15 to about 25% by weight and said alkyl vinyl ether is present in an amount of from about 10 to about 30% by weight.

7. The ionomer of any one of Claims 1 to 6 wherein said copolymer has from about 35 to about 75% of the carboxylic acid groups ionized by neutralization with metal ion selected from the group consisting of sodium, potassium, zinc, calcium and magnesium.

8. The ionomer of any one of Claims 1 to 4 wherein the ionomer is a graft copolymer.

9. An improved process of preparing ionic copolymers having improved low temperature properties, said process being selected from the group consisting of direct copolymerization and graft copolymerization wherein

(A) said direct copolymerization comprises polymerizing ethylene, unsaturated carboxylic acid and at least one comonomer in the presence of free radical polymerization initiator at elevated temperatures followed by neutralization of the carboxylic acid groups of the resultant direct copolymer with metal ions, and

(B) said graft copolymerization comprises polymerizing ethylene and at least one comonomer in the presence of free radical polymerization initiator at elevated temperatures and grafting unsaturated carboxylic acid or anhydride onto the ethylene/comonomer polymer backbone followed by neutralization of the carboxylic acid groups of the resultant graft copolymer with metal ions,

the improvement comprising selecting said comonomer from the group consisting of softening comonomers that are characterized by being copolymerizable with ethylene and forming a homopolymer that has a glass transition temperature of −37°C or below, and selecting the unsaturated acid from the group consisting of acrylic acid, methacrylic acid, maleic acid, fumaric acid, itaconic acid and half esters of maleic, fumaric and itaconic acid, said copolymer containing from about 10 to about 87% by weight of ethylene, from about 3 to about 30% by weight of acid, and from about 10 to about 60% by weight of softening comonomer, the polymerization temperature being from about 100 to about 200°C, from about 3 to about 90% of the carboxylic acid groups of the copolymer being neutralized with metal ions selected from groups Ia, Ib, IIa, IIb, IIIa, IVa, VIb and VIII of the Periodic Table.

10. The process of Claim 9 wherein said softening comonomer is selected from the group consisting of alkyl esters of acrylic acid, alkyl vinyl ethers, vinyl esters and vinyl siloxanes.

11. The process of Claim 9 or 10 wherein said metal ion is selected from the group consisting of sodium, potassium, zinc, calcium, magnesium, lithium, aluminum, nickel, and chromium.

12. The process of Claim 9, 10 or 11 wherein said softening comonomer is selected from the group consisting of alkyl esters of acrylic acid and alkyl vinyl ethers wherein the alkyl group of said acrylic acid ester is selected from the group consisting of n-propyl, n-butyl, n-octyl, 2-ethylhexyl and 2-methoxyethyl and the alkyl group of said ether is selected from the group consisting of n-butyl, n-hexyl, 2-ethylhexyl and 2-methoxyethyl.

13. The improved process of any one of Claims 9 to 12 wherein the process is direct copolymerization, said unsaturated acid is selected from the group consisting of acrylic acid and methacrylic acid, said softening comonomer is selected from the group consisting of alkyl esters of acrylic acid and alkyl vinyl ethers and said alkyl ester is selected from the group consisting of n-butyl acrylate, 2-ethylhexyl acrylate and 2-methoxyethyl acrylate, and said alkyl vinyl ether is selected from the group consisting of n-butyl vinyl ether and n-hexyl vinyl ether.

14. The improved process of any one of Claims 9 to 13 wherein the polymerization temperature is from

7

about 130 to about 160°C and the polymerization pressure is from about 140 mPa (20,000 psi) to about 350 mPa (50,000 psi).

15. The improved process of any one of Claims 9 to 14 wherein said ethylene is present in an amount of from about 60 to about 75% by weight, said unsaturated acid is present in an amount of from about 5 to about 15% by weight, said alkyl ester is present in an amount of from about 10 to about 25% by weight and said alkyl vinyl ether is present in an amount of from about 10 to about 30% by weight.

16. The improved process of any one of Claims 9 to 15 wherein said copolymer has from about 35 to about 75% of the carboxylic acid groups ionized by neutralization with metal ion selected from the group consisting of sodium, potassium, zinc, calcium and magnesium.

17. The improved process of any one of Claims 9 to 12 wherein the process is graft copolymerization.

18. A thermoplastic blend of the improved ionomer of any one of Claims 1 to 8 with material selected from the group consisting of nylon, polypropylene, propylene-ethylene copolymer, linear polyethylene, and ethylene/unsaturated carboxylic acid copolymer.

19. A golf ball comprising a core and a cover, wherein said cover comprises the ionic copolymer of any one of Claims 1 to 8.

**Patentansprüche**

1. Ionisches Copolymer aus Ethylen, ungesättigter Carbonsäure und wenigstens einem weichmachenden Comonomer, das dadurch gekennzeichnet ist, daß es mit Ethylen copolymerisierbar ist und ein Homopolymer bildet, das eine Glasübergangstemperatur von −37°C oder weniger aufweist, wobei das ionische Copolymer verbesserte Niedrigtemperatureigenschaften aufweist, worin die ungesättigte Carbonsäure ausgewählt wird aus der Gruppe bestehend aus Acrylsäure, Methacrylsäure, Maleinsäure, Fumarsäure, Itaconsäure und Halbestern von Malein-, Fumar- und Itaconsäure, wobei das Copolymer etwa 10 bis etwa 87 Gew.% Ethylen, etwa 3 bis etwa 30 Gew.% ungesättigte Säure und etwa 10 bis etwa 60 Gew.% weichmachendes Comonomer enthält, dieses Copolymer etwa 3 bis etwa 90% durch Neutralisation mit aus den Gruppen Ia, Ib, IIa, IIb, IIIa, IVa, VIb und VIII des Periodensystems der Elemente ausgewählten Metallionen ionisierte Carbonsäuregruppen aufweist, wobei das Copolymer durch einen niedrigen Grad an Kettenverzweigungen von bis zu etwa 2,8 Kettenverzweigungen/1000 Hauptketten-Methyleneinheiten gekennzeichnet ist.

2. Ionisches Copolymer nach Anspruch 1, worin das weichmachende Comonomer ausgewählt ist aus der Gruppe bestehend aus Alkylestern der Acrylsäure, Alkylvinylether, Vinylestern und Vinylsiloxanen.

3. Ionomer nach Anspruch 1 oder 2, worin das Metallion ausgewählt ist aus der Gruppe bestehend aus Natrium, Kalium, Zink, Calcium, Magnesium, Lithium, Aluminium, Nickel und Chrom.

4. Ionomer nach Anspruch 1, 2 oder 3, worin das weichmachende Comonomer ausgewählt ist aus der Gruppe bestehend aus Alkylestern der Acrylsäure und Alkylvinylether, worin die Alkylgruppe der Acrylsäureester ausgewählt ist aus der Gruppe bestehend aus n-Propyl, n-Butyl, n-Octyl, 2-Ethylhexyl und 2-Methoxyethyl und die Alkylgruppe des Ethers ausgewählt ist aus der Gruppe bestehend aus n-Butyl, n-Hexyl, 2-Ethylhexyl und 2-Methoxyethyl.

5. Ionomer nach einem der Ansprüche 1 bis 4, worin das Ionomer ein direktes Copolymer ist, die ungesättigte Säure ausgewählt ist aus der Gruppe bestehend aus Acrylsäure und Methacrylsäure, das weichmachende Comonomer ausgewählt ist aus der Gruppe bestehend aus Alkylestern der Acrylsäure und Alkylvinylethern und der Alkylester ausgewählt ist aus der Gruppe bestehend aus n-Butylacrylat, 2-Ethylhexylacrylat und 2-Methoxyethylacrylat und der Alkylvinylether ausgewählt ist aus der Gruppe bestehend aus n-Butylvinylether und n-Hexylvinylether.

6. Ionomer nach Anspruch 5, worin Ethylen in einer Menge von etwa 60 bsi etwa 75 Gew.% vorhanden ist, die ungesättigte Säure in einer Menge von etwa 5 bis etwa 15 Gew.% vorhanden ist, der Alkylester in einer Menge von etwa 15 bis etwa 25 Gew.% vorhanden ist und der Alkylvinylether in einer Menge von etwa 10 bis etwa 30 Gew.% vorhanden ist.

7. Ionomer nach einem der Ansprüche 1 bis 6, worin das Copolymer Carbonsäuregruppen aufweist, die zu etwa 35 bis etwa 75% durch Neutralisation mit einem Metallion, ausgewählt aus der Gruppe bestehend aus Natrium, Kalium, Zink, Calcium und Magnesium, ionisiert sind.

8. Ionomer nach einem der Ansprüche 1 bis 4, worin das Ionomer ein Pfropf-Copolymer ist.

9. Verbessertes Verfahren zur Herstellung ionischer Copolymere mit verbesserten Niedertemperatureigenschaften, wobei das Verfahren ausgewählt ist aus der Gruppe bestehend aus der Direkt-Copolymerisation und Pfropf-Copolymerisation, worin

(A) die direkte Copolymerisation die Polymerisation von Ethylen, einer ungesättigten Carbonsäure und wenigstens eines Comonomeren in Gegenwart eines freie-Radikale-Polymerisationsinitiators bei erhöhten Temperaturen, gefolgt von der Neutralisation der Carbonsäuregruppen des resultierenden direkten Copolymeren mit Metallionen umfaßt und

(B) die Pfropf-Copolymerisation die Polymerisation von Ethylen und wenigstens eines Comonomeren in Gegenwart eines freie-Radikale-Polymerisationsinitiators bei erhöhten Temperaturen und Aufpfropfen einer ungesättigten Carbonsäure oder eines Anhydrids auf das Ethylen/Comonomer-Polymergerüst, gefolgt von der Neutralisation der Carbonsäuregruppen des resultierenden Pfropf-Copolymeren mit Metallionen umfaßt,

wobei die Verbesserung umfaßt, daß das Comonomer ausgewählt wird aus der Gruppe bestehend aus weichmachenden Comonomeren, die dadurch gekennzeichnet sind, daß sie mit Ethylen copolymerisierbar sind und daß sie ein Homopolymer bilden, das eine Glasübergangstemperatur von −37°C oder weniger aufweist, und daß die ungesättigte Säure ausgewählt wird aus der Gruppe bestehend aus Acrylsäure, Methacrylsäure, Maleinsäure, Fumarsäure, Itaconsäure und den Halbestern von Malein-, Fumar- und Itaconsäure, wobei das Copolymer etwa 10 bis etwa 87 Gew.% Ethylen, etwa 3 bis etwa 30 Gew.% Säure und etwa 10 bis etwa 60 Gew.% weichmachendes Comonomer enthält, die Polymerisationstemperatur etwa 100 bis etwa 200°C beträgt, etwa 3 bis etwa 90% der Carbonsäuregruppen des Copolymeren durch Metallionen, ausgewählt aus den Gruppen Ia, Ib, IIa, IIb, IIIa, IVa, VIb und VIII des Periodensystems neutralisiert sind.

10. Verfahren nach Anspruch 9, worin das weichmachende Comonomer ausgewählt ist aus der Gruppe bestehend aus Alkylestern der Acrylsäure, Alkylvinylethern, Vinylestern und Vinylsiloxanen.

11. Verfahren nach Anspruch 9 oder 10, worin das Metallion ausgewählt ist aus der Gruppe bestehend aus Natrium, Kalium, Zink, Calcium, Magnesium, Lithium, Aluminium, Nickel und Chrom.

12. Verfahren nach Anspruch 9, 10 oder 11, worin das weichmachende Comonomer ausgewählt ist aus der Gruppe bestehend aus Alkylestern der Acrylsäure und Alkylvinylethern, worin die Alkylgruppe des Acrylsäureesters ausgewählt ist aus der Gruppe bestehend aus n-Propyl, n-Butyl, n-Octyl, 2-Ethylhexyl und 2-Methoxyethyl und die Alkylgruppe des Ethers ausgewählt ist aus der Gruppe bestehend aus n-Butyl, n-Hexyl, 2-Ethylhexyl und 2-Methoxyethyl.

13. Verbessertes Verfahren nach einem der Ansprüche 9 bis 12, worin das Verfahren eine direkte Copolymerisation ist, die ungesättigte Säure ausgewählt ist aus der Gruppe bestehend aus Acrylsäure und Methacrylsäure, das weichmachende Comonomer ausgewählt ist aus der Gruppe bestehend aus Alkylestern der Acrylsäure und Alkylvinylethern und der Alkylester ausgewählt ist aus der Gruppe bestehend aus n-Butylacrylat, 2-Ethylhexylacrylat und 2-Methoxyethylacrylat, und der Alkylvinylether ausgewählt ist aus der Gruppe bestehend aus n-Butylvinylether und n-Hexylvinylether.

14. Verbessertes Verfahren nach einem der Ansprüche 9 bis 13, worin die Polymerisationstemperatur etwa 130 bis etwa 160°C beträgt und der Polymerisationsdruck etwa 140 mPa (20 000 psi) bis etwa 350 mPa (50 000 psi) beträgt.

15. Verbessertes Verfahren nach einem der Ansprüche 9 bis 14, worin Ethylen in einer Menge von etwa 60 bis etwa 75 Gew.% vorhanden ist, die ungesättigte Säure in einer Menge von etwa 5 bis etwa 15 Gew.% vorhanden ist, der Alkylester in einer Menge von etwa 10 bis etwa 25 Gew.% vorhanden ist und der Alkylvinylether in einer Menge von etwa 10 bis etwa 30 Gew.% vorhanden ist.

16. Verbessertes Verfahren nach einem der Ansprüche 9 bis 15, worin das Copolymer Carbonsäuregruppen aufweist, die zu etwa 35 bis etwa 75% durch Neutralisation mit einem Metallion, ausgewählt aus der Gruppe bestehend aus Natrium, Kalium, Zink, Calcium und Magnesium, ionisiert sind.

17. Verbessertes Verfahren nach einem der Ansprüche 9 bis 12, worin das Verfahren eine Pfropf-Copolymerisation ist.

18. Thermoplastische Mischung des verbesserten Ionomeren nach einem der Ansprüche 1 bis 8 mit einem Material, ausgewählt aus der Gruppe bestehend aus Nylon, Polypropylen, Propylen-Ethylen-Copolymer, linearem Polyethylen und Ethylen/ungesättigtem Carbonsäurecopolymer.

19. Golfball, umfassend einen Kern und eine Hülle, worin die Hülle das ionische Copolymer nach einem der Ansprüche 1 bis 8 umfaßt.

**Revendications**

1. Copolymère ionique d'éthylène, d'acide carboxylique insaturé et d'au moins un comonomère amollissant qui est caractérisé comme étant copolymérisable avec l'éthylène et comme formant un homopolymère dont la température de transition vitreuse est de −37°C ou inférieure, ledit copolymère ionique possédant des propriétés améliorées à basses températures, dans lequel l'acide carboxylique est choisi dans le groupe formé par l'acide acrylique, l'acide méthacrylique, l'acide maléique, l'acide fumarique, l'acide itaconique et les hémiesters des acides maléique, fumarique et itaconique, ledit copolymère contenant environ 10 à environ 87% en poids d'éthylène, environ 3 à environ 30% en poids d'acide insaturé et environ 10 à environ 60% en poids dudit comonomère amollissant, environ 3 à environ 90% des groupes acide carboxylique dudit copolymère étant ionisés par neutralisation avec un ion métallique choisi dans les groupes Ia, Ib, IIa, IIb, IIIa, IVa, VIb et VIII du Tableau Périodique des Eléments, ledit copolymère étant caractérisé par un faible degré de ramification de chaîne d'au plus environ 2,8 ramifications de chaîne/1000 motifs méthylène de charpente.

2. Le copolymère ionique de la revendication 1, dans lequel ledit comonomère amollissant est choisi dans le groupe formé par les esters alkyliques d'acide acrylique, les éthers d'alkyle et de vinyle, les esters vinyliques et les vinyl-siloxanes.

3. L'ionomère de la revendication 1 ou 2, dans lequel ledit ion métallique est choisi dans le groupe formé par le sodium, le potassium, le zinc, le calcium, le magnésium, le lithium, l'aluminium, le nickel et le chrome.

4. L'ionomère de la revendication 1, 2 ou 3, dans lequel ledit comonomère amollissant est choisi dans le groupe formé par les esters alkyliques d'acide acrylique et les éthers d'alkyle et de vinyle dans lesquels le

# 0 115 190

groupe alkyle desdits esters d'acide acrylique est choisi dans le groupe formé par les groupes n-propyle, n-butyle, n-octyle, 2-éthylhexyl et 2-méthoxyéthyle, et le groupe alkyle desdits éthers est choisi dans le groupe formé par les groupes n-butyle, n-hexyle, 2-éthylhexyl et 2-méthoxyéthyle.

5. L'ionomère de l'une quelconque des revendications 1 à 4, dans lequel. l'ionomère ester un copolymère direct, ledit acide insaturé est choisi dans le groupe formé par l'acide acrylique et l'acide méthacrylique, et ledit comonomère amollissant est choisi dans le groupe formé par les esters alkyliques d'acide acrylique et les éthers d'alkyle et de vinyle, ledit ester alkylique étant choisi dans le groupe formé par l'acrylate de n-butyle, l'acrylate de 2-éthylhexyle et l'acrylate de 2-méthoxyéthyle, et ledit éther d'alkyle et de vinyle étant choisi dans le groupe formé par l'éther de n-butyle et de vinyle et l'éther de n-hexyle et de vinyle.

6. L'ionomère de la revendication 5, dans lequel ledit éthylène est présent en une proportion d'environ 60 à envoron 75% en poids, ledit acide insaturé est présent en une proportion d'environ 5 à environ 15% en poids, ledit ester alkylique est présent en une proportion d'environ 15 à environ 25% en poids, et ledit éther d'alkyle et de vinyle est présent en une proportion d'environ 10 à environ 30% en poids.

7. L'ionomère de l'une quelconque des revendications 1 à 6, dans lequel environ 35 à environ 75% des groupes acide carboxylique dudit copolymère sont ionisés par neutralisation avec un ion métallique choisi dans le groupe formé par le sodium, le potassium, le zinc, le calcium et le magnésium.

8. L'ionomère de l'une quelconque des revendications 1 à 4, dans lequel l'ionomère est un copolymère greffé.

9. Un procédé perfectionné par préparer des copolymères ioniques possédant des propriétés améliorées à basses températures, ledit procédé étant choisi dans le groupe formé par la copolymérisation directe et la copolymérisation par greffage, dans lequel

(A) ladite copolymérisation directe consiste à polymériser de l'éthylène, un acide carboxylique insaturé et au moins un comonomère en présence d'un initiateur de polymérisation radicalaire à des températures élevées, puis à neutraliser par des ions métalliques les groupes acide carboxylique du copolymère direct résultant, et

(B) ladite copolymérisation par greffage consiste à polymériser de l'éthylène et au moins un comonomère en présence d'un initiateur de polymérisation radicalaire à des températures élevées et à greffer un acide ou anhydride carboxylique insaturé sur la charpente du polymère d'éthylène/comonomère, puis à neutraliser par des ions métalliques les groupes acide carboxylique du copolymère greffé résultant,

le perfrctionnement consistant à choisir ledit comonomère dans le groupe formé par les comonomères amollissants qui sont caractérisés comme étant copolymérisables avec l'éthylène et comme formant un homopolymère dont la température de transition vitreuse est de −37°C ou inférieure, et à choisir l'acide insaturé dans le groupe formé par l'acide acrylique, l'acide méthacrylique, l'acide maléique, l'acide fumarique, l'acide itaconique et les hémi-esters des acides maléique, fumarique et itaconique, ledit copolymère contenant environ 10 à environ 87% en poids d'éthylène, environ 3 à environ 30% en poids d'acide et environ 10 à environ 60% en poids de comonomère amollissant, la température de polymérisation étant d'environ 100 à environ 200°C, environ 3 à environ 90% des groupes acide carboxylique du copolymère étant neutralisés par des ions métalliques choisis dans les groupes Ia, Ib, IIa, IIb, IIIa, IVa, VIb et VIII du Tableau Périodique.

10. Le procédé de la revendication 9, dans lequel ledit comonomère amollissant est choisi dans le groupe formé par les esters alkyliques d'acide acrylique, les éthers d'alkyle et de vinyle, les esters de vinyle et les vinyl-siloxanes.

11. Le procédé de la revendication 9 ou 10, dans lequel ledit ion métallique est choisi dans le groupe formé par le sodium, le potassium, le zinc, le calcium, le magnésium, le lithium, l'aluminium, le nickel et le chrome.

12. Le procédé de la revendication 9, 10 ou 11, dans lequel ledit comonomère amollissant est choisi dans le groupe formé par les esters alkyliques d'acide acrylique et les éthers d'alkyle et de vinyle dans lesquels le groupe alkyle desdits esters d'acide acrylique est choisi dans le groupe formé par les groupes n-propyle, n-butyle, n-octyle, 2-éthylhexyle et 2-méthoxyéthyle, et le groupe alkyle desdits éthers est choisi dans le groupe formé par les groupes n-butyle, n-hexyle, 2-éthylhexyle et 2-méthoxyméthyle.

13. Le procédé perfectionné de l'une quelconque des revendications 9 à 12, dans lequel le procédé est la copolymérisation directe, ledit acide insaturé est choisi dans le groupe formé par l'acide acrylique et l'acide méthacrylique, et ledit comonomère amollissant est choisi dans le groupe formé par les esters alkyliques d'acide acrylique et les éthers d'alkyle et de vinyle, ledit ester alkylique étant choisi dans le groupe formé par l'acrylate de n-butyle, l'acrylate de 2-éthylhexyle et l'acrylate de 2-méthoxyéthyle, et ledit éther d'alkyle et de vinyle étant choisi dans le groupe formé par l'éther de n-butyle et de vinyle et l'éther de n-hexyle et de vinyle.

14. Le procédé perfectionné de l'une quelconque des revendications 9 à 13, dasn lequel la température de polymérisation est d'environ 130 à environ 160°C et la pression de polymérisation est d'environ 140 MPa (20 000 psi) à environ 350 MPa (50 000 psi).

15. Le procédé perfectionné de l'une quelconque des revendications 9 à 14, dans lequel l'éthylène est présent en une proportion d'environ 60 à environ 75% en poids, l'acide insaturé est présent en une proportion d'environ 5 à environ 15% en poids, l'ester alkylique est présent en une proportion d'environ 10

10

à environ 25% en poids, et l'éther d'alkyle et de vinyle est présent en une proportion d'environ 10 à environ 30% en poids.

16. Le procédé perfectionné de l'une quelconque des revendications 9 à 15, dans lequel environ 35 à environ 75% des groupes acide carboxylique dudit copolymère sont ionisés par neutralisation avec un ion métallique choisi dans le groupe formé par le sodium, le potassium, le zinc, le calcium et le magnésium.

17. Le procédé perfectionné de l'une quelconque des revendications 9 à 12, dans lequel le procédé est la copolymérisation par greffage.

18. Un mélange thermoplastique du monomère amélioré de l'une quelconque des revendications 1 à 8 avec une matière choisie dans le groupe formé par le nylon, le polypropylène, un copolymère propylène-éthylène, le polyéthylène, linéaire et un copolymère éthylène/acide carboxylique insaturé.

19. Une balle de golf comprenant un noyau et une enveloppe, dans laquelle ladite enveloppe est constituée du copolymère ionique de l'une quelconque des revendications 1 à 8.

11